# EUROPÄISCHE PATENTSCHRIFT

(11) **EP 0 875 088 B1**
(45) Veröffentlichungstag und Bekanntmachung des Hinweises auf die Patenterteilung: **19.07.2000**
(21) Anmeldenummer: 97914042.3
(22) Anmeldetag: 08.01.1997
(51) Int. Cl.: H02H 11/00

(54) **VERBINDUNGSANORDNUNG FÜR EINE LAST AN VERBRAUCHERNETZE**
CONNECTOR FOR A LOAD TO CONSUMER NETWORKS
CONNECTEUR POUR UNE CHARGE A RESEAUX D'UTILISATION

(30) Priorität: 19.01.1996 DE 19601878
(43) Veröffentlichungstag der Anmeldung: 04.11.1998
(73) Patentinhaber: SIEMENS AKTIENGESELLSCHAFT, 80333 München (DE)
(72) Erfinder: WOLF, Johann, D-93080 Pentling (DE)
(86) Internationale Anmeldenummer: DE9700013
(87) Internationale Veröffentlichungsnummer: WO9726695

(56) Entgegenhaltungen:
- EP-A- 0 581 078
- EP-A- 0 621 674
- US-A- 3 611 036

## Beschreibung

Die Erfindung bezieht sich auf eine Verbindungsanordnung für Verbrauchernetze, die eine Verbindung im kurzschlußfreien Zustand innerhalb zulässiger Betriebsgrößen mittels zumindest einer Schaltstrecke bewirkt.

Viele Kurzschlüsse entstehen beim Einschalten, da ein entsprechender Auslöser, beispielsweise eines Leitungsschutzschalters, erst wirkt, wenn der Kurzschluß bereits fließt. Ebenso bleiben viele Stromkreise zugeschaltet, obwohl kein Strom entnommen wird. Auch bei Über- oder Unterspannung bleiben üblicherweise die Stromkreise meist eingeschaltet. Für einzelne der geschilderten Probleme gibt es bereits Teillösungen, wie Unterspannungsauslöser zu Schützen und Schutzschaltern sowie Kurzschlußauslöser in Schutzschaltern.

Der Erfindung liegt die Aufgabe zugrunde, eine Verbindungsanordnung für eine Last an Verbrauchernetze zu entwickeln, die Sicherheit gegen Draufschalten auf einen Kurzschluß in einer einzigen Anordnung ermöglicht. Die Lösung der geschilderten Aufgabe erfolgt durch eine Verbindungsanordnung nach Anspruch 1. Sie arbeitet außer mit Strom- und Spannungssensoren sowie mit einer Verarbeitungseinheit mit einer Reihenschaltung aus Zuschaltzweig, parallel zur Last, und einem Brückenzweig, der die Schaltstrecke überbrückt. Der Brückenzweig enthält der Funktion nach einen Eintaster, wobei der Brückenzweig mit dem Zuschaltzweig einen Spannungsteiler bildet. Unter Prüfung auf Kurzschluß wird hier auch verstanden, daß auf eine zu erwartende unzulässig hohe Überlastung durch fehlerhafte Zustände geprüft wird. Diese können als zu niedrige Widerstände auf der Verbraucherseite verstanden werden.

Eine einschlägige Verbindungsanordnung ist ohne Reihenschaltung aus Zuschaltzweig und Brückenzweig, also auch ohne Spannungsteiler, bekannt (EP-A1-0 621 674). Auch die bekannte Verbindungsanordnung führt nur dann eine Zuschaltung eines Verbrauchers durch, wenn kein Kurzschluß auf der Verbraucherseite vorliegt. Dazu wird eine Impedanzmessung vorgenommen. Im einzelnen handelt es sich auch dort um eine Verbindungsanordnung für eine Last an Verbrauchernetze, die eine Verbindung im kurzschlußfreien Zustand innerhalb zulässiger Betriebsgrößen mittels zumindest einer Schaltstrecke bewirkt, wobei Strom- und Spannungssensoren mit einer Verarbeitungseinheit verbunden sind, mittels der ein Zuschaltzweig einschaltbar und abschaltbar ist. Der im strengeren Sinn als Zuschaltkreis ausgeführte Zuschaltzweig ist galvanisch von Lastkreis und Brücke über den Arbeitskontakt getrennt. Bei der bekannten Verbindungsanordnung ist im Zuschaltkreis eine 3etätigungseinrichtung angeordnet, die in Wirkverbindung mit einer Schaltstrecke im Verbrauchernetz'steht. Die Schaltstrecke ist auch dort durch einen Brückenzweig mit Widerstand überbrückt. Ein darin vorgesehener Eintaster hat bei der bekannten Verbindungsanordnung jedoch nicht die Funktion, die Verbindungsanordnung betriebsmäßig einzuschalten.

Die Verbindungsanordnung arbeitet als universelles Überwachungsrelais, das zentral, also kompakt, oder dezentral ausgeführt sein kann. Es weist nachstehende Eigenschaften auf bzw. es ermöglicht folgende Abstimmungen:
- Nichtdraufschaltung auf einen bestehenden Kurzschluß bzw. große Überlast;
- Nichtdraufschaltung bzw. Ausschaltung bei zu hoher und zu niedriger Netzspannung;
- Nichtdraufschaltung bzw. Ausschaltung bei Überlast, einstellbar oder fest eingestellt;
- Nichtdraufschaltung bzw. Ausschaltung bei zu geringer oder gar keiner Last;
- zu- und abschaltbar vor Ort manuell;
- fernschaltbar, insbesondere über Busankopplung.

Der Spannungsteiler aus Brückenzweig und Zuschaltzweig läßt sich vorteilhaft nach Anspruch 2 ausbilden.

Auf weitere vorteilhafte Ausführungen beziehen sich Verbindungsanordnungen nach den Ansprüchen 3 und nach 4.

Die Erfindung soll nun anhand von in der Zeichnung grob schematisch wiedergegebenen Ausführungsbeispielen näher erläutert werden.

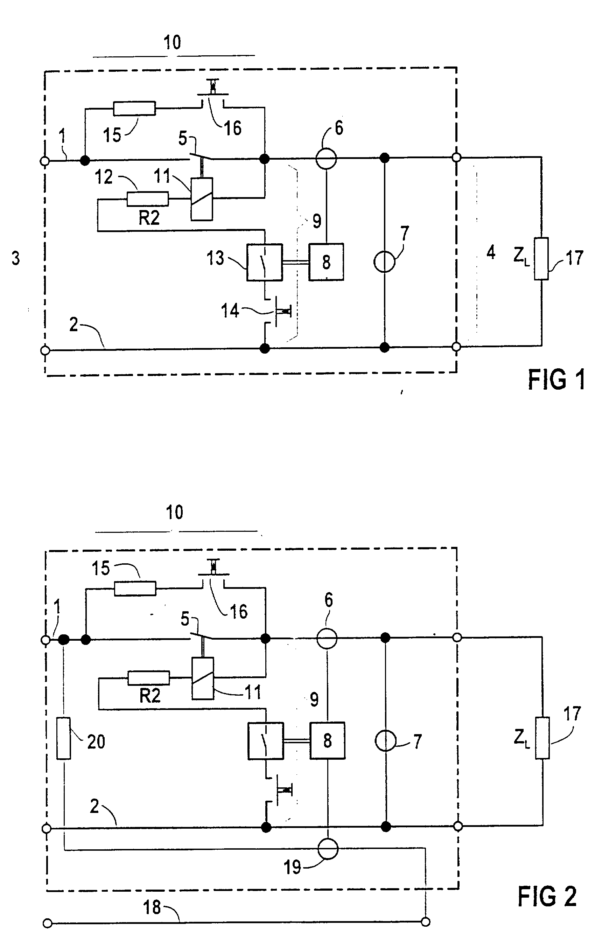

In Fig. 2 ist eine Verbindungsanordnung mit zusätzlicher Schutzleiterüberwachung dargestellt.
- In FIG 1: ist eine Grundausführung der Verbindungsanordnung veranschaulicht.
- In FIG 2: ist eine Verbindungsanordnung mit zusätzlicher Schutzleiterüberwachung dargestellt.
- In FIG 3: ist die Anordnung nach FIG 1 mit einer zusätzlichen Einrichtung zum Fernschalten wiedergegeben.
- In FIG 4: ist die Einrichtung nach FIG 3 mit einer zusätzlichen Busankopplung veranschaulicht.

Die Verbindungsanordnung nach FIG 1 für ein Verbrauchernetz mit dem Außenleiter 1, früher Phasenleiter genannt, und dem Neutralleiter 2 ermöglicht eine Versorgungsseite 3 auf eine Verbraucherseite 4 mit Hilfe einer Schaltstrecke 5 zu verbinden. Die Verbindungsanordnung weist im Ausführungsbeispiel nach FIG 1 einen Stromsensor 6, einen Spannungssensor 7 und eine Verarbeitungseinheit 8 auf. Ein Zuschaltzweig 9 ist parallel zur Last angeordnet und mit dem Außenleiter 1 und dem Neutralleiter 2 verbunden. Andererseits ist der Zuschaltzweig 9 in Reihenschaltung mit einem Brückenzweig 10 verbunden.

Der Zuschaltzweig 9 weist im Ausführungsbeispiel einen Magnetantrieb 11 mit einem gegebenenfalls komplexen Widerstand Z auf, einen Widerstand 12, R 2, und ein Schaltelement 13 auf. Zusätzlich kann ein Ausschalter 14, beispielsweise als Austaster, vorgesehen sein. Der Brückenzweig 10 weist einen Widerstand 15 und einen Einschalter 16 mit der Funktion eines Eintasters auf.

Wenn der Einschalter 16 betätigt wird, können Stromsensor 6 und Spannungssensor 7 Werte messen, die der Verarbeitungseinheit 8 zugeführt werden. Wenn diese innerhalb eines erlaubten Bereichs liegen, wird das Schaltelement 13 leitend geschaltet, und über den Brückenzweig 10 und den Zuschaltzweig 9 erfolgt eine Spannungsteilung.

Bei einer Ausführung nach Anspruch 2 bildet der Brückenzweig 10 einen Widerstand, der einerseits darauf abgestimmt ist, daß bei zulässiger Last 17 nur ein unerheblicher Spannungsabfall entsteht und bei Kurzschluß eine Begrenzung auf verträgliche Ströme erfolgt. Andererseits ist der Brückenzweig 10 hinsichtlich des Zuschaltzweiges 9 im Sinne eines Spannungsteilers im Widerstand darauf abgestimmt, daß bei Kurzschluß anstelle einer Last 17 am Brückenzweig 10 so viel Spannung abfällt, daß im Zuschaltzweig 9 die Spannung zum Betätigen der Betätigungseinrichtung 11 nicht ausreicht. Allgemein kann man am Zuschaltzweig durch geeignete Vorkehrungen im Kurzschlußfall eine entsprechend verminderte Spannung anstehen lassen. Andererseits läßt das Schaltelement 13 eine Zuschaltung der Versorgungsspannung bzw. Netzspannung an eine Last 17 nur so lange zu, wie der Stromsensor 6 einen nicht zu großen Strom an die Verarbeitungseinheit 8 meldet. Über den Spannungssensor 7 wird kontrolliert, ob eine zu hohe oder ob eine zu niedrige Spannung bezüglich vorgegebener erlaubter Spannungen ansteht.

Die Erfassung eines vor dem Zuschalten der Schaltstrecke bestehenden Kurzschlusses auf der Verbraucherseite 4 erfolgt über eine Spannungsteilung durch Brückenzweig 10 und Zuschaltzweig 9. Der Zuschaltzweig ist hierbei durch einen im Kurzschlußfall vergleichsweise geringen Widerstand zur Last geshuntet.

Einen erweiterten Schutz erhält man durch eine Schutzleiterüberwachung nach FIG 2. Der Schutzleiter 18 erhält einen Prüfstrom, der durch einen als Meßstromsensor dienenden Sensor 19 gemessen wird. Im Ausführungsbeispiel ist der Meßstrom vom Außenleiter 1 durch einen Vorwiderstand 20 auf den Schutzleiter 18 gelegt. Die Netzstromerfassung im Sensor 19 kann durch einen Optokoppler erfolgen.

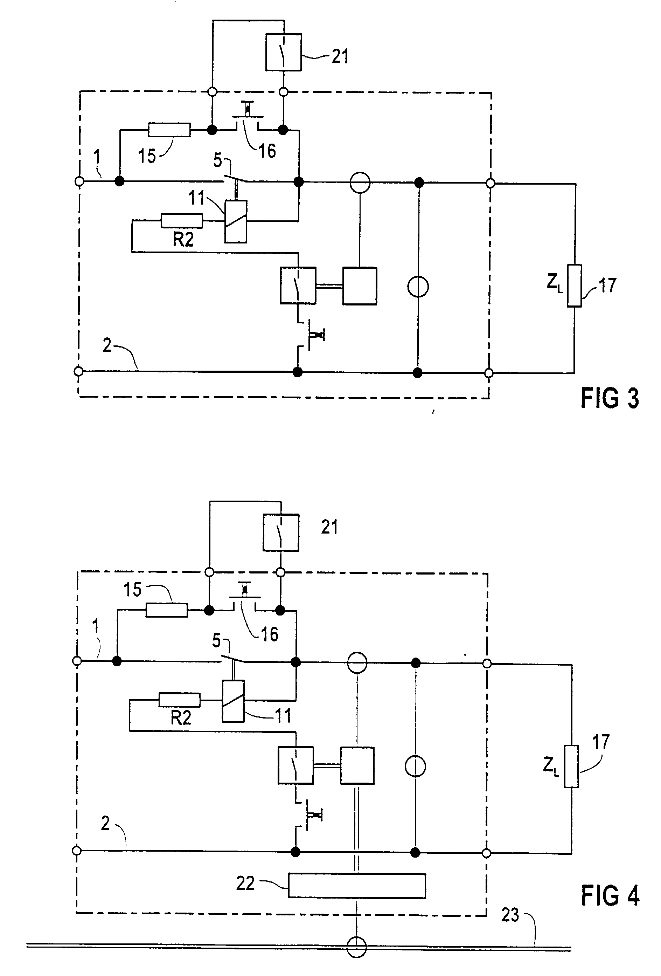

Eine Ferneinschaltung kann mit einer Verbindungsanordnung nach FIG 3 erzielt werden. Der Einschalter 16 ist innerhalb oder außerhalb einer als Gerät ausgeführten Verbindungsanordnung durch ein gesondertes Schaltelement 21 geshuntet. Man kann auch eine Fernauslösung durch eine Reihenschaltung von Schaltelementen im Sinne von Öffnern zum Ausschalter 14 im Zuschaltzweig 9 ermöglichen. Die Fernauslösung kann darüber hinaus auch direkt über die Verarbeitungseinheit 8 und das Schaltelement 13 erfolgen.

Alle Verbindungsanordnungen nach den Figuren 1, 2 oder 3 können durch einen Busankoppler 22 mit einer Busleitung 23 eines Bussystems verbunden sein. Die Ausführung nach FIG 4 stimmt im übrigen mit der nach FIG 3 überein. Schaltstrecke 5 und Betätigungseinrichtung 11 können zusammen als Leitungsschutzschalter realisiert sein. Die Funktionen der Anordnung nach FIG 4 können zusätzlich hinsichtlich der Fernbetätigung als Leitungsschutzschalter mit Fernantrieb, beispielsweise mit Magnetantrieb oder Motorantrieb, realisiert sein.

## Patentansprüche

1. Verbindungsanordnung für eine Last (17) an Verbrauchernetze (1,2), die eine Verbindung im kurzschlußfreien Zustand innerhalb zulässiger Betriebsgrößen mittels zumindest einer Schaltstrecke (5) bewirkt, wobei Strom- (6) und Spannungssensoren (7) mit einer Verarbeitungseinheit (8) verbunden sind, mittels der ein Zuschaltzweig (9) parallel zur Last (17) einschaltbar und abschaltbar ist, in dem eine Betätigungseinrichtung (11) angeordnet ist, die in Wirkverbindung mit der zumindest einen Schaltstrecke (5) steht, wobei die zumindest eine Schaltstrecke (5) durch einen Brückenzweig (10) mit Widerstand (15) überbrückt ist, welcher der Funktion nach einen Eintaster (16) enthält, wobei der Brückenzweig (10) mit dem Zuschaltzweig (9) einen Spannungsteiler bildet.

2. Verbindungsanordnung nach Anspruch 1,
**dadurch gekennzeichnet,** daß der Brükkenzweig (10) einen Widerstand (15) bildet, der einerseits darauf abgestimmt ist, daß bei zulässiger Last (17) nur ein unerheblicher Spannungsabfall entsteht und bei Kurzschluß eine Begrenzung auf verträgliche Ströme bewirkt ist, und wobei der Brückenzweig (10) hinsichtlich des Zuschaltzweiges (9) im Sinne eines Spannungsteilers im Widerstand darauf abgestimmt ist, daß bei Kurzschluß anstelle einer Last (17) am Brückenzweig (10) so viel Spannung abfällt, daß im Zuschaltzweig (9) die Spannung zum Betätigen der Betätigungseinrichtung (11) nicht ausreicht.

3. Verbindungsanordnung nach Anspruch 1 oder 2,
**dadurch gekennzeichnet,** daß die Verarbeitungseinheit (8) an Busleitern (23) eines Bussystems angeschlossen ist.

4. Verbindungsanordnung nach Anspruch 1 oder 2,
**dadurch gekennzeichnet,** daß Schaltstrecke (5) und Betätigungseinrichtung (11) durch einen Leitungsschutzschalter mit Fernantrieb gebildet sind.

## Claims

1. Arrangement for connecting a load (17) to load networks (1, 2) which creates a connection in the absence of a short circuit within permissible operating values by means of at least one contact gap (5), current (6) and voltage sensors (7) being connected to a processing unit (8) which can be used to connect and disconnect a connection path (9) in parallel with the load (17), said connection path containing an actuator (11) which is operatively connected to the at least one contact gap (5), the at least one contact gap (5) being bridged by a bridge path (10) with a resistor (15) which contains a momentary-contact on switch (16) in line with its function, the bridge path (10) forming a voltage divider with the connection path (9).

2. Connection arrangement according to Claim 1, characterized in that the bridge path (10) forms a resistor (15) which is designed, on the one hand, such that only an insignificant voltage drop occurs with a permissible load (17) and, in the event of a short circuit, limiting to tolerable currents is produced, and the resistance of the bridge path (10) with respect to the connection path (9) as a voltage divider being designed such that, in the event of a short circuit instead of a load (17), the voltage drop across the bridge path (10) is so large that the voltage in the connection path (9) is not sufficient to drive the actuator (11).

3. Connection arrangement according to Claim 1 or 2, characterized in that the processing unit (8) is connected to bus conductors (23) of a bus system.

4. Connection arrangement according to Claim 1 or 2, characterized in that the contact gap (5) and the actuator (11) are formed by a circuit-breaker with a remote-control mechanism.

## Revendications

1. Connecteur pour une charge (17) dans des réseaux de consommateurs (1, 2), qui établit une connexion au moyen d'au moins une voie de commutation (5) à l'état sans court-circuit et dans les limites de grandeurs de fonctionnement admissibles, des capteurs de courant (6) et de tension (7) étant reliés à une unité de traitement (8) au moyen de laquelle peut être connectée et déconnectée une branche de mise en circuit (9) qui est parallèle à la charge (17) et dans laquelle est monté un dispositif d'actionnement (11) qui est en liaison active avec la ou les voies de commutation (5), la ou les voies de commutation (5) étant pontées par une branche de pontage (10) avec résistance (15) qui contient la fonction d'un bouton de connexion (16), la branche de pontage (10) formant avec la branche de mise en circuit (9) un diviseur de tension.

2. Connecteur selon la revendication 1,
caractérisé par le fait que la branche de pontage (10) forme une résistance (15) qui est réglée d'une part pour qu'il n'apparaisse qu'une chute de tension négligeable en cas de charge (17) admissible et pour qu'il se produise une limitation à des courants supportables en cas de court-circuit, la branche de pontage (10) étant réglée d'autre part du point de vue de la branche de mise en circuit (9) dans le sens d'un diviseur de tension dans la résistance pour que la chute de tension à la branche de pontage (10) en cas de court-circuit à la place d'une charge (17) soit si grande que la tension destinée à actionner le dispositif d'actionnement (11) ne suffise pas dans la branche de mise en circuit (9).

3. Connecteur selon la revendication 1 ou 2,
caractérisé par le fait que l'unité de traitement (8) est raccordée à des lignes de bus (23) d'un système de bus.

4. Connecteur selon la revendication 1 ou 2,
caractérisé par le fait que la voie de commutation (5) et le dispositif d'actionnement (11) sont formés par un disjoncteur de ligne avec commande à distance.
